# EUROPEAN PATENT SPECIFICATION

(11) **EP 1 537 517 B1**
(45) Date of publication and mention of the grant of the patent: **07.12.2011**
(21) Application number: 03761723.0
(22) Date of filing: 26.06.2003
(51) Int. Cl.: G06K 7/10, H04M 1/725

(54) **DEVICE FOR DIRECTING THE OPERATION OF A USER'S PERSONAL COMMUNICATION APPARATUS**
EINRICHTUNG ZUM ANLEITEN DES BETRIEBS EINER PERSÖNLICHEN KOMMUNIKATIONSVORRICHTUNG EINES BENUTZERS
DISPOSITIF POUR GUIDER LE FONCTIONNEMENT D'UN APPAREIL DE COMMUNICATION PERSONNEL D'UTILISATEURS

(30) Priority: 26.06.2002 GB 0214714; 25.06.2003 GB 0314693
(43) Date of publication of application: 08.06.2005
(73) Proprietor: Nokia Corporation, 02150 Espoo (FI)
(72) Inventor: CHIPCHASE, Jan, X (US); ERIKSSON, Timo Olavi, X (US); OHHASHI, Hideki, X (US); TAKAHASHI, Kiyotaka, X (JP); MORI, Eigo, X (US); SUGANO, Makoto Uilive Kosugi 602, Kawasaki-shi Kanagawa 211-0063 (JP)
(74) Representative: Higgin, Paul
(86) International application number: PCT/IB2003/002494
(87) International publication number: WO 2004/003829

(56) References cited:
- EP-A2- 0 467 036
- WO-A2-01/50224
- US-A- 5 446 447
- US-A- 5 604 486
- US-A- 5 640 002

## Description

The present invention relates to directing the operation of a user's personal communication apparatus.

Personal communication apparatus in the form of cellular telephones have become ubiquitous. As cellular telephones have evolved from just mobile analogues of traditional fixed-line telephones providing only voice communication into multi-faceted communication devices providing not only voice communication but a range of communication options including notably internet access, there is a need to prevent the complexity of using the cellular telephone's user interface escalating. The present invention is generally concerned with this problem.

WO 01/50224 discloses a facility for automatically accessing information and/or services on a computer network. The facility transmits a request for information and/or services by reading a unique code off of a computer-readable medium, and transmitting the unique code to a server computer using a network-enabled device. In response to receiving the unique code, the server computer retrieves selected data from a database table, the selected data being linked to the unique code in the database table. The selected data is then provided to the network-enabled device. The selected data can include a web site or an application program or a URL. When a URL is provided to the network-enabled device, the facility can launch a browser program on the network-enabled device to retrieve the information and/or services associated with the URL.

US 5,640,002 discloses a portable barcode and RF ID tag reader that gathers information about items to be purchased etc by reading barcodes or RF ID tags. A store host computer gathers information about items to be purchased from the portable barcode/ID Tag readers and then the items are bagged by the customer at the checkout stand or by employees of the store at the checkout stand or in a separate warehouse from which the customer picks up the order. The portable barcode/RF ID tag reader can also be used in authenticating articles by accessing a factory computer using a serial number for the article scanned from an RF ID tag on the article. The portable barcode/RF ID tag reader is comprised of a microprocessor coupled to a bar code reader, an RF ID tag reader, a spread spectrum RF transceiver, a communication port, an audible feedback device, a touchscreen or light pen and display, a thermal printer and a magnetic stripe card reader and a smart card reader.

EP 0467 036 A2 discloses the identification and tracking of items by attaching radio transceiver tags to the items and sending signals between the tags and one or more interrogation subsystems. The tags are normally in low-power standby mode unless signalled by an interrogator. The interrogator broadcasts a signal to all of the tags within reception range, and the tags respond after pseudo-random delays. When the interrogator has identified a tag, it signals that fact back to the tag and the tag returns to standby mode. The tags that were not identified by the interrogator retransmit their identification signals, and the process continues until all tags within range of the interrogator have been identified.

EP-A-1 213 691 discloses a card settlement method using a mobile information terminal provided with an IC card read/write function and a wireless communication function for the settlement of a transaction in a business establishment, comprising the steps of: having a customer using a business establishment wirelessly connect to an authorization server through a network by the mobile information terminal; having the customer load his or her IC card in the mobile information terminal, read the information stored in this IC card, and send it to the authorization server; having the authorization server decide on the authorization of the current transaction from authentication information stored in the IC card and proving the legitimacy of the card, settlement information containing at least a card number and personal identification information input from the customer and proving the legitimacy of the customer; sending a temporary password issued from a settlement server to the mobile information terminal for display after the authorization of the current transaction; inputting the temporary password and the current transaction information from a business establishment side settlement terminal and sending it to the settlement server; and having the settlement server settle the transaction with the password and the transaction information satisfying the settlement conditions.

DE 200 12 538 U discloses an internet terminal that communicates with an identification module in order to establish a connection to the internet. The identification module contains configuration data for the connection of the internet terminal to the internet. The identification module may be designed as a contactless transponder, e.g. as a radio-frequency identification module.

According to one aspect of embodiments of the present invention, there is provided an apparatus as claimed in claim 1.

According to another aspect of embodiments of the present invention, there is provided a method as claimed in claim 16.

According to one aspect of embodiments of the present invention, not currently claimed in independent form, a device may be provided for directing the operation of a user's personal communication apparatus, comprising an RF tag located in a decorative casing of a size to facilitate handling by the user, wherein the RF tag stores a code to direct the operation of a user's personal communication apparatus.

Beyond the dimensional limitation, there is no limit on the appearance of the casing except to say that, in preferred embodiments, the casing comprises a gewgaw, ideally appealing to the fashion or aesthetic sensibilities of the user and which may serve as a fashion accessory, or emblem for a particular group.

According to another aspect, the present invention may provide a system comprising a device comprising an RF tag embedded in a casing, and a user's personal communication apparatus having an RF tag reader which is operable upon reading the RF tag to perform an operation associated with said RF tag.

By virtue of the above features, when the user wants to perform a certain operation with the personal communication apparatus, he can by-pass the normal input technologies, typically a keypad, by manoeuvring the device such that the RF tag is read by the RF tag reader, and then the personal communication apparatus performs an operation associated with the RF tag. Thus, the present invention offers rapid access to regularly used functions or operations without the need to navigate a menu. Moreover, access to these regularly used functions is made intuitive by associating a physical object, i.e. the device; with an operation. Also, the device can be used to selectively enable/disable local functions of a user's personal communication apparatus. For example, a secrecy mode can be controlled by the device, the device effectively serving as a physical "key" to lock away and unlock sensitive information, thus effectively affording the functionality which is normally in a user's personal communication apparatus by a PIN code.

Preferably, the casing comprises a gewgaw, ideally appealing to the fashion or aesthetic sensibilities of the user and serving as a fashion accessory, or emblem for a particular group. Preferably, the devices are sized to be easily handled by the user. For example, this means that they are of sufficient size to be held by the user's fingers. Also preferably, the devices are not so large that it becomes a noticeable hindrance for the user to carry a set of them.

In one embodiment, the user's personal communication apparatus includes a marking on the exterior surface of the housing. This marking serves to indicate the interaction area on the apparatus's housing adjacent to which the device should be placed for reading.

The user's personal communication apparatus may comprise a docking port into which the device can be docked for reading the RF tag. In one embodiment, the RF tag can only be read when docked so as to avoid the possibility of an accidental request of an operation associated with the code on an RF tag. To this end, either the RF tag reader/ RF tag can be calibrated to provide for only very close range reading i.e. when docked, or the RF tag can be provided with a switch means which is activated only when the RF tag is properly docked. In another embodiment, a plurality of devices can be docked simultaneously. Preferably, the operation directed by the user is dependent on the combination of the docked devices. An advantage of employing a docking port is that the act of docking can signal to the RF tag reader to perform a read operation, whereby it is relatively energy efficient in that energy is not wasted trying to attempt a reading when there is no RF tag in reading range.

With this in mind, according to another aspect, the present invention may provide a set of devices for directing the operation of users' personal communication apparatuses, each comprising an RF tag embedded in a decorative casing, the appearance of each casing being distinguishable from others in the set.

In this way, the user can access a range of functions of the personal communication apparatus by selecting the appropriate device from the set and using that to activate the function.

According to a still further aspect, the present invention may provide a method of directing the operation of the user personal communication apparatus by
the user requesting a desired operation by performing an interaction with the user's personal communication apparatus which generates an action code from external of the user's personal communication apparatus;
automatically routing an action-request message, including an action code field which is the same as or derived from said action code, to a server; and
the server performing instructions to further the performance of the desired operation.

These features of the invention enable a user request which originates outside of the user's personal communication apparatus to be processed when the meaning of the request is not known to the user's personal communication apparatus. Preferably, said action code is the code is read from the device of the present invention.

According to another aspect, the present invention may provide a system comprising a user's personal communication apparatus and a server for carrying out the above-mentioned method.

According to another aspect, the present invention may provide a device for directing the operation of a user's personal communication apparatus, comprising an RF tag embedded in a gewgaw.

Exemplary embodiments of the invention are herein described with reference to the accompanying drawings, in which:
Figures 1(a) and 1(b) show an iBead in accordance with the invention;
Figures 2(a), 2(b), 2(c) εt 2(d) show different aspects of a mobile phone equipped with an RF ID reader in accordance with the invention;
Figure 3 shows a first system architecture in accordance with the invention;
Figure 4 shows the structure of a message packet in accordance with the present invention;
Figures 5(a), 5(b) εt 5(c) show the path of a message packet in the Figure 3 system;
Figure 6 shows a second system architecture in accordance with the invention;
Figure 7 shows the path of a message packet in the Figure 6 system;
Figures 8 shows example applications of a system in accordance with the invention;
Figure 9 shows a third system architecture in accordance with the invention; and
Figures 10(a), 10(b), Figure 11 to 17 εt Figures 18(a) and 18(b) show how iBeads can interact with an RF ID reader.

RF ID technology is based on bi-directional radio frequency communication between an RF ID control unit and an RF tag. The tag comprises an antenna, control circuitry and memory in which information is stored. The memory may be read-only in which case the information is unalterable, or read/write which means that information can be overwritten or added to memory at a later time by the user. The control unit comprises an antenna and modulation/demodulation circuits. When operating, the control unit emits an electromagnetic field which extends over a certain volume around the control unit. If an RF tag passes into this volume, the field activates the control circuitry of the RF tag. A dialog is then set up in which the tag identifies itself by sending the information contained in its memory to the control unit. Upon receiving the information, the control unit decodes it. RF tags can be either passive or active. In the case of a passive RF tag, there is no on-board power supply, rather, energy is obtained from the electromagnetic field generated by the RF ID controller. Active tags contain an intrinsic power source, such as a battery.

RF ID technology has become technically mature and is being adopted in different fields ranging from, for example, storage management to electronics tickets in commuting. At present, RF tags are available at about the size of a sand grain and at low cost.

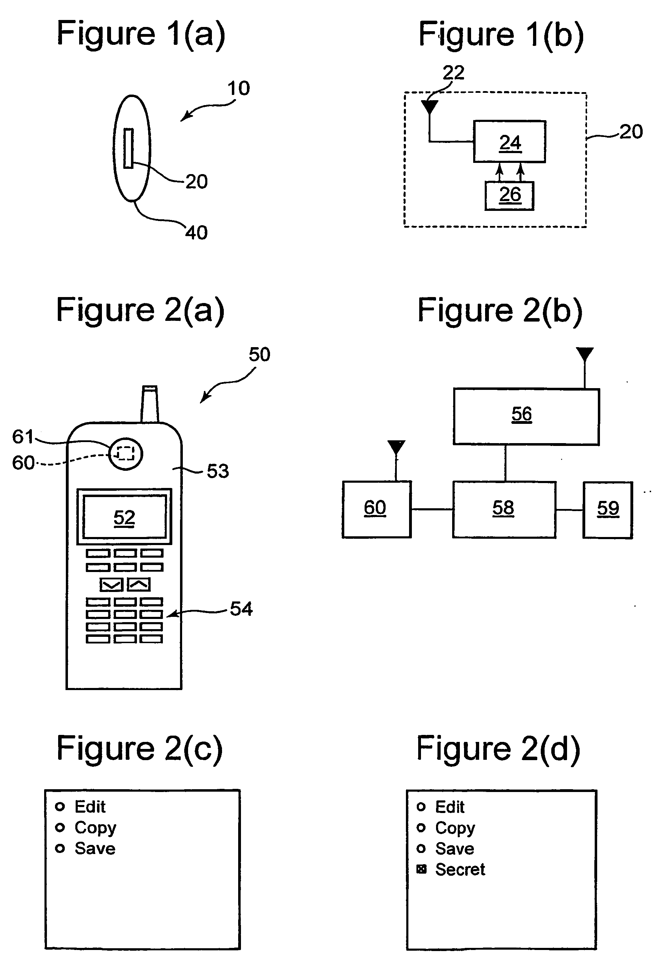

Referring to Figures 1(a) and Figure 1(b), an iBead 10 comprising an RF tag 20 embedded in a decorative casing 40. Referring to Figure 1 (b), the RF tag 20 comprises an antenna 22, control circuitry 24, and read-only memory 26 in which a 128-bit code number is stored. The RF tag 20 is passive and so does not contain its own power source. The physical size of the chip bearing the RF tag is only 0.4 mm squared. The casing 40 is much larger and is made so deliberately to facilitate easy handling by the user, and to enable the casing to perform an aesthetic function. For the purposes of the accompanying drawing, the casing is shown diagrammatically without regard to aesthetic considerations. However, in a physical embodiment of the invention, the casing can serve as a fashion accessory and blend with or augment the look of the user, or make a statement about the user. Also, the casing may represent a particular private group of people, the emblem of a sporting team, or the brand of a commercial venture. The casing can also be hard or soft. The casing may be as substantially planar as the RF tag architecture will allow. Also, the casing may be provided by another object having a different original primary purpose. The casing may also not wholly enclose the RF tag, although normally it should afford significant protection to the RF tag 20.

A portable personal communication apparatus in the form of a mobile phone 50 conventionally comprises a display 52, a keypad 54, and a housing 53 as shown in Figure 2(a), and a cellular radio interface 56 capable of data/speech reception and transmission to and from a cellular network 70, and a central control unit 58 for coordinating the overall operation of the mobile phone and a memory unit 59, as shown in Figure 2(b). The memory unit is used to store, inter alia, a phonebook, an address book, emails and SMS messages which have been sent and received, and call lists containing lists of calls made and received, and missed calls. In accordance with an embodiment of the invention, the mobile phone 50 further comprises an RF ID reader 60. In Figure 2(a), the RF ID reader 60 is shown in dotted outline to indicate that it lies below the surface of the housing 53. A marking 61 provided on the housing 53 in the area near to the RF ID reader 60 serves to indicate to the user the area in which the iBead can be read.

The cellular network 70 includes a gateway server 75 through which internet access is achieved. An iBead broker server 80 and a plurality of iBead action servers 85a, 85b are also shown making up part of the internet. The gateway server 75 is connected to the broker server by an encrypted data pipeline 89, and the broker server 80 is connected to the action servers 85a, 85b by encrypted data pipelines 90a, 90b. Web sites 95a, 95b of service providers are also shown on application servers.

When the user brings the iBead 10 into the reading range of the RF ID reader 60, the RF ID reader 60 reads the code on the iBead 10 and communicates this to the central control unit 58. First, the central control unit 58 checks in its memory 59 to see whether the code of the iBead is known locally. If the code is known locally, the central control unit 58 performs the macro/operation allocated to the code.

One example of this type of macro is sending an email to a spouse to indicate that you will be home later than usual. The whole process of sending the email could be triggered by the iBead 10 with no further intervention being required from the user. Alternatively, the macro might stop short of actually sending the email and provide the user with the opportunity to amend and/or approve the email before sending. Even in this case, navigating the menu structure, and the cumbersome process of entering an email on a mobile phone keypad is largely avoided. Another example is that a macro performs the operation of opening up the browser of the mobile phone at a predetermined IP address. (It is emphasized that the code read from the iBead references the macro, and other than that connection has no relationship to the IP address.) If, for example, the iBead bore the logo of CNN, then the predetermined IP address might be that of the CNN home page. Another example is to use a macro to activate a secrecy mode. A secrecy mode is a conventional feature which enables a user to hide selected information from an unauthorized person and the normal access control mechanism is a PIN code. Figure 2(c) shows a typical list of options available in respect of an individual entry in the user's phonebook. If a "secrecy" iBead is read, an association is created between the secrecy iBead and currently-displayed phonebook entry. The display 52 for a short while indicates that the phonebook entry has been made secret as shown in Figure 2(d), and then that phonebook entry disappears, either indefinitely or for a predetermined duration controllable via a menu by the user. When the secrecy iBead is read again, the associated phonebook entry is made visible again and the display 52 adopts the Figure 2(d) state. At this point, the association between the iBead and the phonebook may be broken by selecting and thereby deactivating the secrecy option. If the user does not select that option, then, after a short duration, pre-selected by the user, the phonebook entry reverts to its hidden, secret state. More than one iBead maybe associated with selected information, whereby if a given iBead is lost, the secrecy mode may be disabled or unlocked by another iBead. A conventional: PIN code is used to globally reveal all the information previously made secret.

If the code of the iBead 10 is not known locally, the phone 50 sends a action_request message over it's cellular interface 56 to a remote server. The server can either be a default server. Alternatively, the server which should be accessed can be indicated by a part of the code itself. The server can be part of the cellular network or a server on the internet.

The action_request message 100 comprises at least a message identifier field 102 indicating that the message is an iBead packet, an action code field 104 containing the code of the RF tag in the iBead, and an authentication field 106 containing information such as the IMEI code of the mobile phone.

In the embodiment shown, the action_request message is based on the message identifier field 102 automatically directed to the iBead broker server 80. The broker server 80 contains a database which, inter alia, maps or associates the codes of the RF tags in the iBeads with predetermined actions. If the system is configured such that for each iBead registration, the broker server 80 always contains only a URL to an action server, then the predetermined action can be merely a URL, the requirement to access it being implicit as a result of the system configuration.

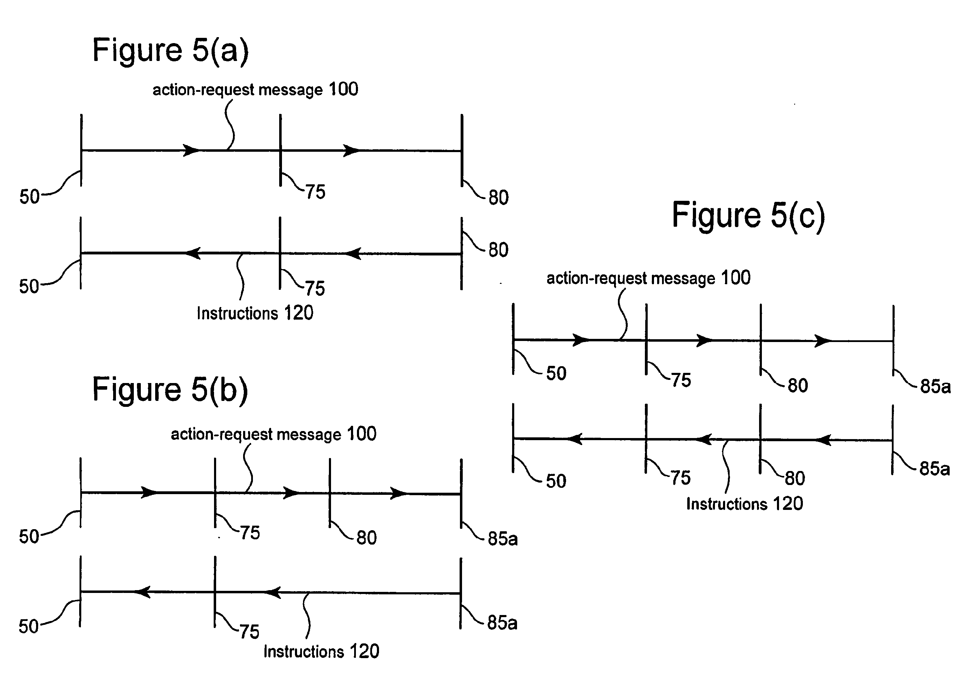

If the broker server 80 recognizes the action code in the action_request message, then two possibilities arise. In the case where the instruction or operation associated with the code is relatively simple and/or relate to a standard system operation, then the instructions 120 for the macro may be returned to the mobile phone 50 directly by the broker server and carried out as shown by the diagram in Figure 5(a). In the case where the instruction or operation associated with the code is more complicated or relates to a non-standard operation, the broker server 80 delegates responsibility to a relevant action server, let's say in this case action server 85a, which then sends the instructions 120 for the macro to the phone 50, either directly as shown by the diagram in Figure 5(b), or back via the broker server 80 as shown in Figure 5(c). The advantage of the Figure 5(c) embodiment is that it is possible to make use of the encrypted pipeline 90b.

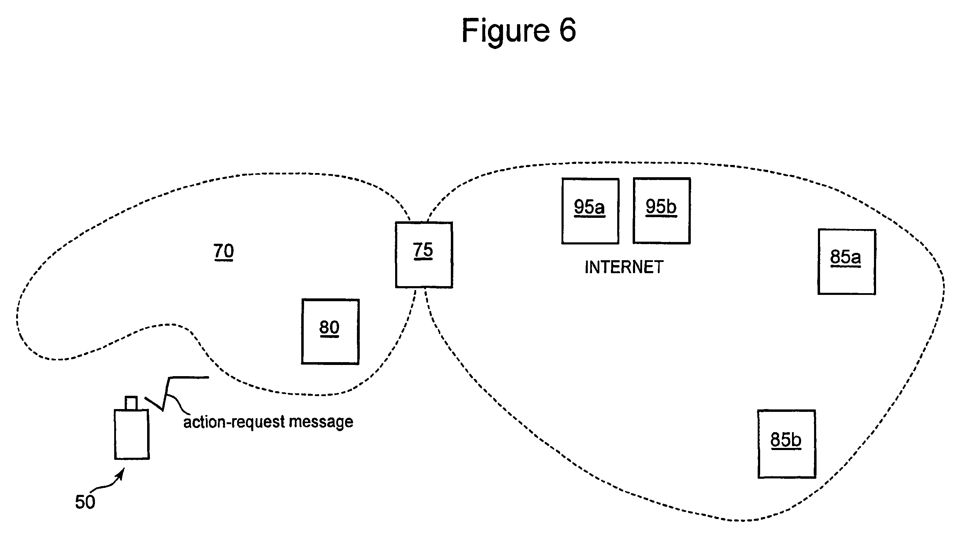

An alternative architecture is shown in Figure 6. In this embodiment, the broker server 80 is located inside the cellular network 70. As the broker server 80 is wholly controlled by the operator, there is a business need to insulate the private information of the iBead sponsor and users from the operator and so to this end security is provided by an encryption mechanism as described below.

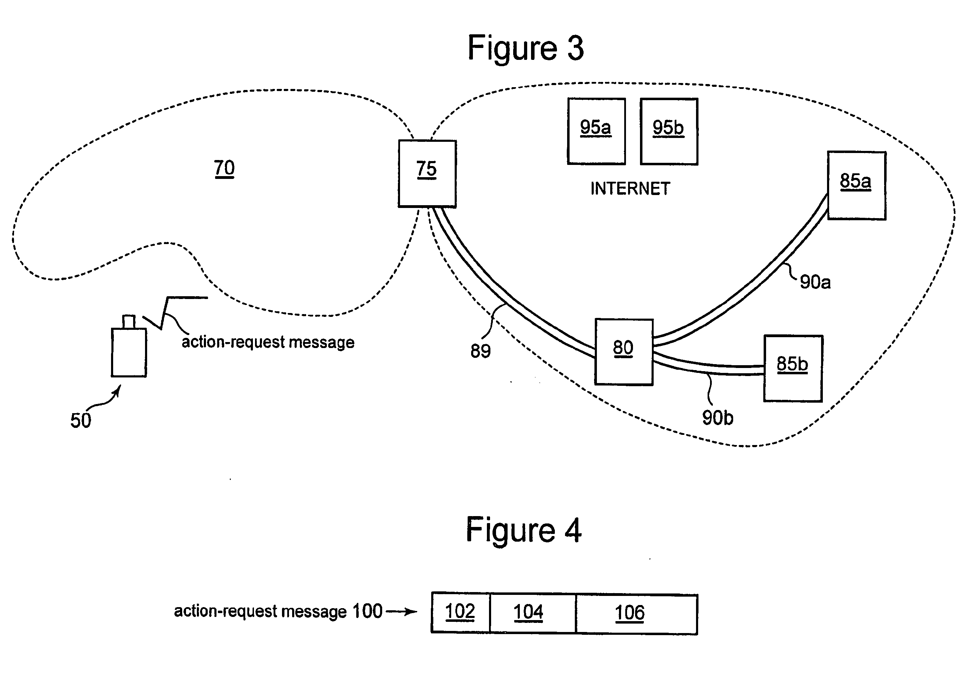

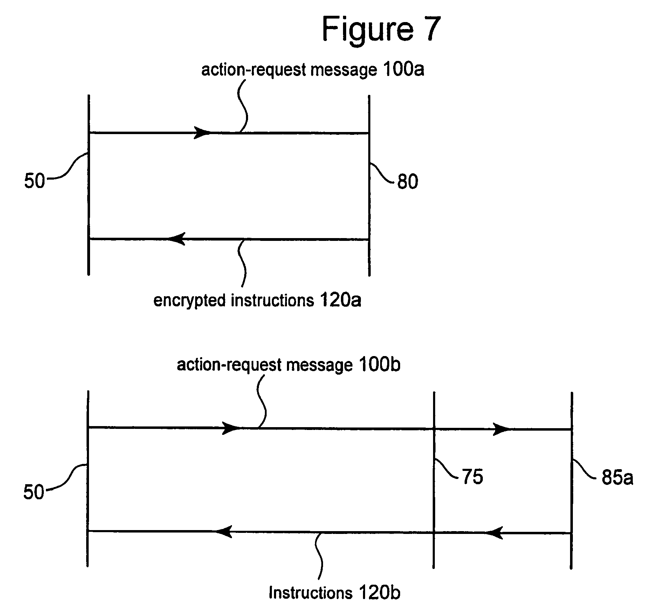

The mobile phone 50 treats the RF ID code which it reads from the memory 26 of iBead as having two parts: a KEY part for decryption, and an action code part for designating the required operation. Referring to Figure 7, on reading an iBead, the phone 50 sends an action_request message 100a to the cellular network. On the basis of the message identifier field 102 of the action_request message 100a indicating that this message is an iBead packet destined for the broker sever 80, the message is routed to the broker server 80. The broker server 80 contains a database containing a plurality of iBead registrations, each registration record comprising at least an action code field and a corresponding encrypted macro/instructions field. On receipt of the message 100a, the broker server matches the action code field 104 with the action code of an iBead registration in its database and sends back the corresponding encrypted instructions 120a to the mobile phone identified by the authentication field 106. Since the mobile phone knows the KEY, i.e. the code part of the RF ID code, it is able to decrypt the instructions. It will thus be appreciated that although the iBead registration database is located on a server located in the operator's network, the operator lacking knowledge of the KEY cannot interpret the information which stores and maintains. As per the Figure 3 embodiment, the received instructions 120a can simply be for local operations or can instruct further remote access. With the Figure 6 system architecture especially, it is preferred to keep the length of the encrypted macros short, where possible, to minimize the amount of decryption which needs to be performed by the mobile phone and to minimize the burden on the operator. Thus, it is preferred that the received instructions provide only a further URL to a remote action server 85a, 85b and an instruction for further more detailed instructions to be retrieved therefrom. Thus, in this case, a further action_request message 100b is sent, this time the message identifier field 102 indicating that this is an iBead packet destined for the internet and specifies the URL of an action server 85a, 85b. The action server 85a, 85b also contains a database containing a plurality of action code fields, and a corresponding macro/instructions field. On receipt of the message 100b, the action server matches the action code field 104 with an entry in the action server database and sends back the corresponding instructions 120b to the mobile phone identified by the authentication field 104.

For both the figure 3 and Figure 6 embodiments, instructions for the action servers 85a, 85b can either be for local operations or can instruct further remote access to the service provider web sites 95a, 95b or a combination thereof.

In the Figure 3 embodiment, the KEY derived from the iBead can be used for encryption of the traffic between the mobile phone and the servers 85a, 85b, 95a, 95b in the internet.

An advantage of the remotely-stored macro approach illustrated by Figures 3 and Figure 6 is that the perceived function of the iBead 10 can be centrally controlled and updated according to need by the sponsor of the iBead 10. A further advantage of this approach is that the remote access performed by the mobile phone 50 alerts the servers to the use of the iBead, and to the identity of the iBead by the authentication field 106_{.} Another advantage is that the nature of the system, especially the pivotal role of the broker server 80, enables iBeads which have inappropriate functionality associated with them to be easily disabled. The commercial advantage of this remotely-stored macro approach might be further illustrated by the following examples, where a retailer is used a specific example of an iBead sponsor.

In a system having the Figure 3 system architecture, as part of a product promotion, a retailer may have produced a set of iBeads having a casing signifying the retailer, each iBead bearing the same code. The retailer registers the iBead's code and the action to be performed on the broker server 80 via the internet. Thus, once a customer reads the iBead (and assuming the action is not known in the phone 50 itself) the action defined by the retailer can be performed in various ways, as described above. One possibility is that the iBead might provide access to the retailer's own web site 95a which includes web pages dedicated to the product to be promoted. Because the server will record the number of hits on the web pages, the promotional material shown and/or terms of the offer for sale can be dynamically adjusted or customized in real time according to consumer interest The retailer also has a real time overview of currently active iBeads.

In a system having the Figure 6 system architecture, the retailer may produce a set of iBeads having a casing signifying the retailer, but each iBead bearing a different code. Because in this case, there is a one-to-one relationship between an iBead and an individual, an association can be made between an individual iBead and its users. This knowledge enables other possible applications.

A specialist iBead service company on behalf of the retailer registers the set of iBeads on the cellular operator's broker server 80, the broker server database action codes for each iBead containing an encrypted URL corresponding to an action server 85a. The specialist iBead company installs in the action server in respect of each the registered iBeads, iBead middleware necessary to properly interface with retailer's iBead-related web site and further instructions for accessing the retailer's web site 95a. When the phone 50 reads the iBead 10, the broker server 80 and the action server 85a are accessed as described in relation to Figure 7, where the instructions 120b sent from the action server comprise the retailer's iBead middleware and further instructions for accessing the retailer's web site 95a.

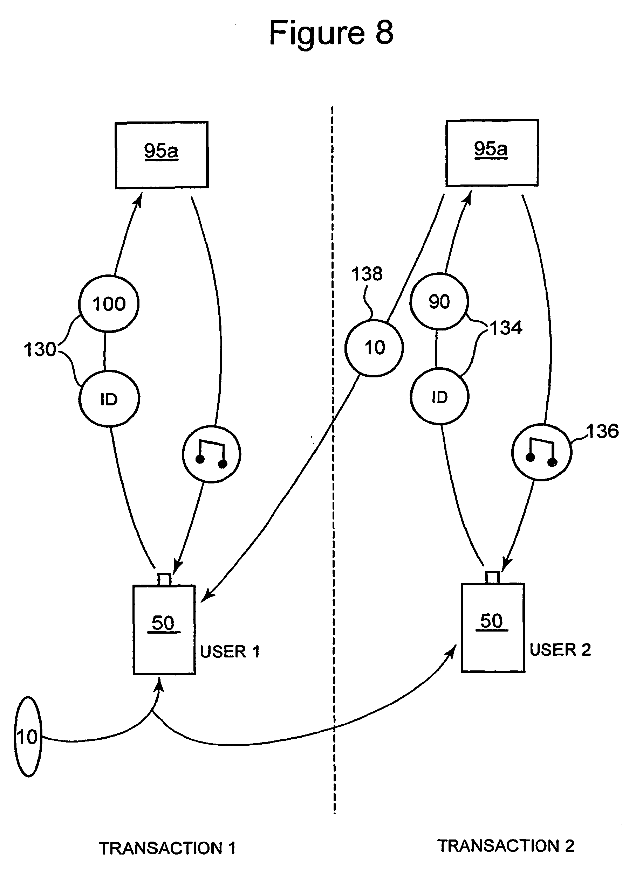

Once a connection with the retailer's web site is established, transactions as per Figure 8 can be carried out. In Figure 8, the particular transaction being carried out is the download of digital content, specifically music. User 1 who is the first user and buyer of the iBead 10 accepts the music to be downloaded at the specified price (100 currency units) by means of a payment message 130 which also specifies the identity (ID) of the iBead and that of the user. Once the payment has been received the purchased content is downloaded in the message 132. The retailer thus has a record of the first user of the iBead, the identity of the first user, and the price that was paid for the music. The iBead 10 is then passed by user 1 to user 2. User 2 then by means of the iBead as previously described initiates a second transaction with the web site 95a. When user 2 accepts the music to be downloaded at the specified price (90 currency units) by means of a payment message 134 which also specifies the identity (ID) of the iBead and the second user. Once the payment has been received the purchased content is downloaded in the message 136. As the retailer knows the first user of the iBead, the identity of the first user, and the price that was paid for the music, he is able to make a compensatory payment (10 currency units) to the first user via message 138. This payment could be regarded as a royalty for the first user for putting a particular iBead into circulation amongst his circle of acquaintances.

Also, in this case where the amount of the payment is equal to difference between original selling price and the current selling price, it is form of assurance and comfort to the first user that if he buys content early in its lifetime when the price is high, if he puts the iBead into circulation, he may well receive compensatory payment later on reflecting any drop in price. For subsequent transactions, all the previous users receive an additional payment. In some embodiments, where the market price does not fall, no additional payments are made.

Also, for various applications, the operation performed for the first user can be different or accumulative for the second and subsequent users. The retailer can track the use patterns (type/frequency) of its iBeads via a real time interface accessing the relevant server 80, 85a, 85b, in the internet.

In the above example, the iBead sponsor was a retailer. However, it is an important aspect of the herein-described preferred systems that the architecture
is open and flexible enough so that end-consumers, should they so wish, can straightforwardly become distributors of their own iBeads and content.

In one business model, for example, using the Figure 3 system, end consumers could buy a set of their own iBeads which at the point of sale are registered on the broker server 80. The iBead registration includes a URL of an action server 85a, which URL could be supplied by the iBead seller or the user who wants to use his chosen iBead service company. Thereafter, the user either by means of his mobile phone, or in more complicated cases a PC, accesses the action server and through userfriendly action server user interface software the user can define the actions which it want to perform. For example, a very simple common action might be simply to access his personal home page. Other actions could be to download recently taken pictures or the user's latest song. In the case, where an iBead is used to simply control the local functions of the phone, the programming is done locally.

Where the instructions to be downloaded to the user are dynamic as in some other examples above, it is preferred that the downloading operation is coordinated from an action server, to which the retailer has rights to program, or at the retailer's own server - although, in principle, this might also be done at the broker server 80.

In other embodiments, when the macro or instructions have been first retrieved from a remote server 80, 85a or 85b, they can be cached locally to avoid repeating the download operation.

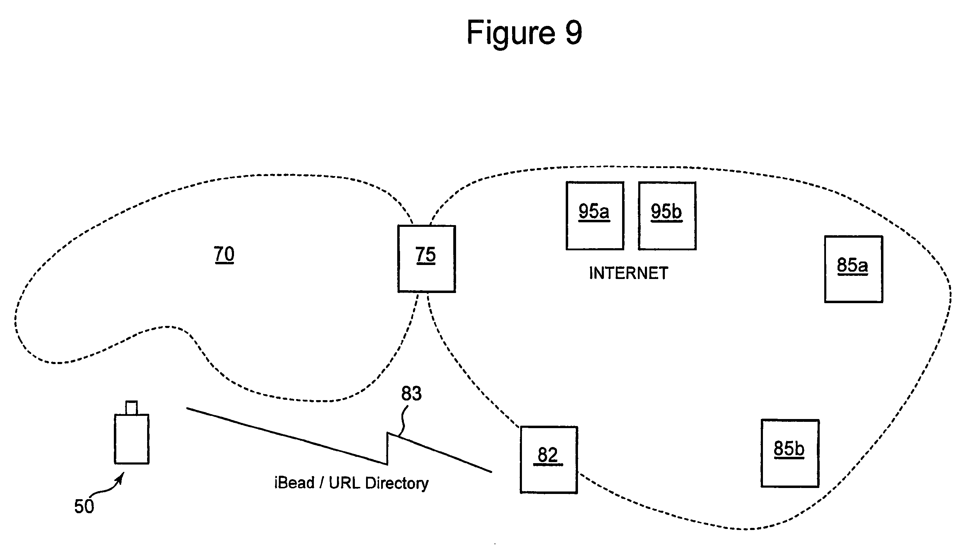

Figure 9 shows a third system architecture in accordance with the invention. In this architecture, the broker server 80 is replaced with a iBead/URL directory server 82, but other than this respect, this system can be used like, and is analogous to, the Figures 3 and 6 systems. The directory server 82 contains a database relating to a certain set of iBeads. The database maps each iBead, as identified by it's RF tag code, with a URL of an internet server 85a,85b,95a,95b. On request from a mobile phone 50, the directory server 82 downloads via a WLAN link 83 a database containing entries relating to a typically large set of iBeads and caches that information for future use. Then, if the user subsequently acquires any iBead in the downloaded set, the mobile phone can directly access that web page without going through a broker server 80. A typical application for this might be in relation to a city's train network. At a station hotspot equipped with a high speed WLAN access point, a user can download the database for the entire network. Then, as needed, the user when needing information about a particular train or a particular station can obtain the relevant iBead at a station. On reading the iBead, the mobile phone gains access to the relevant web pages without accessing the broker server. User's might typically carry an iBead for each of the train lines upon which they normally travel. If they travel on a new line, they just obtain a new iBead for that line.

It will be appreciated that in a system according to the Figure 9 architecture, it is incumbent on the user to periodically update the databases which it locally stores as the they will, no doubt, change with time. However, updating probably need not be so frequent as the URLs should mainly remain quite stable, at least for an entity like a city's train network.

In other embodiments, a iBead/URL directory server 82 can be used in parallel with a broker sever 80.

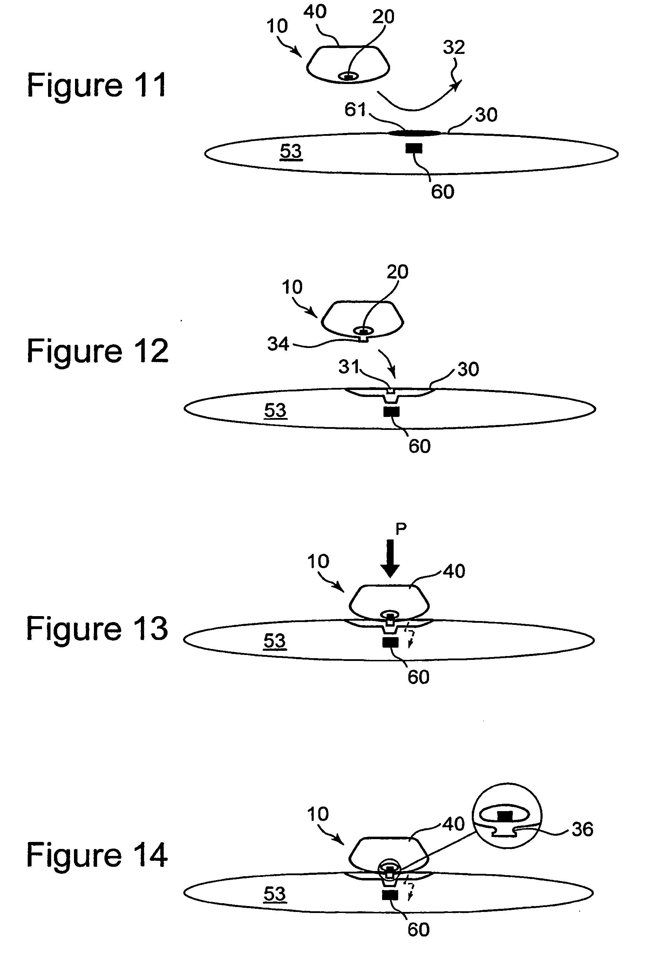

In the above described embodiments, the reading of an iBead 10 was triggered by moving it into the reading range of the RF tag reader 60. This process is illustrated in Figure 11. Referring to Figure 11, an iBead 10 comprising an RF tag 20 is embedded into a protective and/or decorative casing 40. An RF ID reader 60 is located close to the surface but beneath the surface of the phone cover 53. The interaction between iBead 10 and the RF ID reader 60 may be characterized as "skimming". The arrow 32 shows the motion of the iBead which moves it into the reading range of the RF ID reader 60 enabling a non-contact data transfer. For skimming, the casing 40 need only pass in the general vicinity of the RF ID reader 60 in order for the RF tag to be read. The marking 61 on the housing 53 identifies for the user the which area which should be skimmed.

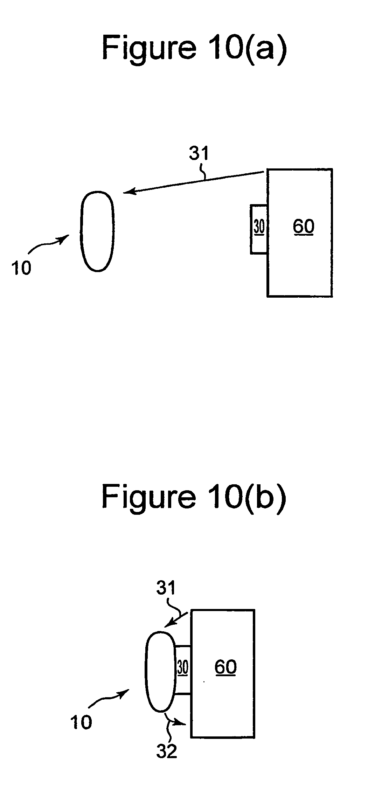

It will be appreciated that from a technical standpoint the RF tag technology does not require contact between an iBead 10 and an RF reader 60 in order to function. However, users are likely to carry a set of iBeads 10 which provide them with a quick and easy way to perform a range of tasks. However, in carrying a set of iBeads, which may be carried together on a single string or strap, there is the risk that more than one iBead will be read by the iBead reader which could lead to actions unintended by the user being performed. One way of indicating which iBead should be activated is to list the iBeads which have been read by the RF tag reader in a menu, and request the user to select the required iBead from the menu. Alternatively, as shown in Figures 10(a) and 10(b), the RF tag reader 60 is equipped with a docking mechanism 30 into which the iBead must be docked in order to be activated for reading. In Figure 10(a), the iBead 10 is not docked and not activated, and thus cannot be read. In Figure 10(b), the iBead is docked to the docking mechanism 30 and can be read. Thus, the use of docking mechanism serves to identify for sure the iBead to be read. Also, in the case where the iBead contains a read-only RF tag, which does include any encryption, whereby the fixed 128-bits can be read by any third party, the selective activation of the iBead is facilitated by docking. Another advantage of employing a docking mechanism is that the act of docking can signal to the RF ID reader 60 that it should attempt a reading operation. This results in a power saving over the Figure 11 embodiment in which the RF ID reader 60 attempts a reading operation at frequent intervals.

There are various ways to activate the iBeads, for example, by mechanical activation. In one embodiment, a magnet in the RF ID reader 60 causes mechanical movement inside the iBead 10 which closes and open circuit pathway in the iBead, thereby activating the resonator of the iBead. Another example is resonator circuit activation, in which the iBead 10 is provided with a magnetic resonator which when remote from the reader does not resonate; but when it is brought close to the reader, a matched circuit in the reader causes the resonator inside the iBead to resonate. From the user experience standpoint, some kind of tactile interaction is often desirable. Accordingly, in one embodiment, a spring/switch is built into the in the RF ID reader and/or docking mechanism 30 and provides tactile feedback when interaction occurs.

Figures 12 to 14 show another example where tactile feedback is provided to the user. Referring to Figure 12, the iBead casing 40 includes a protruding docking member 34. It is inserted into the complementary jaws 31 of a docking mechanism 30 made of compressible, deformable material. Downward pressure, as indicated by the arrow P, on the iBead 10 exerted by the user causes the abutting face of the casing 40 to gently compress the body of the docking mechanism to enable the insertion of the docking member 24 into the jaws 31 to a distance at which ribs (not visible at the scale shown) formed in the jaws 31 snap into engagement with the grooves 36 formed in the docking member 24 and retain the iBead 10 in position. The positive retainment of the iBead is sensed by the user and thus serves to provide tactile feedback. (The grooves are most clearly visible in the enlarged portion of Figure 14). The RF ID reader 60 is calibrated such that it can only read the iBead 10 at a very limited range equivalent to when the iBead is held fast in the docking mechanism 30 as shown in Figure 14. It will be appreciated that this example docking mechanism not only provides the user with tactile feedback as just described, but also serves to control which iBead is read. The iBead can be removed by a concerted pull, the deformability of the docking mechanism enabling proper withdrawal.

In a variation of this embodiment, the calibration of the RF ID reader and the physical properties of the docking mechanism 30 can be adjusted such that once the iBead is held fast in the docking mechanism still further user-applied pressure is required to reduce the distance between the RF tag and the RF ID reader to reading range. Thus, the iBead can act very much like a button.

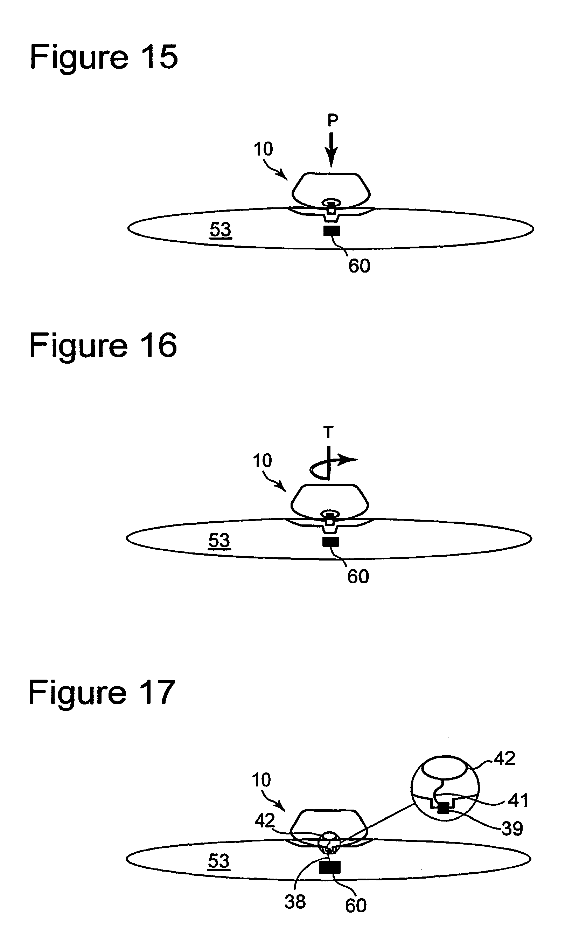

Another docking mechanism is shown in Figures 15 to 17. In this embodiment the casing 40 is first manoeuvred, as indicate by the arrow P in Figure 15, such that the docking member 34 enters the jaws of the docking mechanism and then twisted, as indicated by the arrow T in Figure 16, to lock it into place. As per the previous embodiment, the calibration of the RF ID reader and the physical properties of the docking mechanism 30 can be adjusted such that once the iBead is twist locked into the docking mechanism still further user-applied pressure is required to reduce the distance between the RF tag and the RF ID reader to within reading range. Again, the iBead can act very much like a button.

To unlock and remove the iBead, it is twisted in the opposite direction to T and pulled.

The above embodiments are particularly suited to a situation in which a user buys an iBead and programs it to open a page of the news headlines and he does not like carrying beads on a strap. Since this is something he wants to do every day, he inserts the iBead into the RF ID reader.

Thus it will be appreciated that having a physical object (e.g. a iBead) representing a task or thing (e.g. "call Leon "get latest news") can be easier for the user to understand, since there is a 1:1 relationship between the task, and the object used to complete the task. Also, tactile feedback is a natural extension of what humans already do, for example, when shaking hands or exchanging business cards.

In the Figure 17 embodiment, the iBead 10 is provided with an LED 42 which is coupled to a connection terminal 39 via power supply lines 41. The iBead can be mounted in the docking mechanism 30 as per any of the Figure 12 to 16 embodiments. The RF reader supplies power via a power line 38 to the mouth of the docking mechanism. When the iBead is docked, as previously described, a direct contact is made between the iBead 10 and the RF ID reader 60. Acting on instructions from the central processor 58 an electrical current is sent to the iBead via power supply lines. This can be used to power devices providing user feedback in the casing 40, such as the light emitting diode 42 shown. Alternative devices include a small speaker for providing an audio signal, a bipolar display or a mechanical device for moving or rotating part of the casing 40.

This embodiment provides user feedback on a mobile electronics device. It is particularly suited for status related tasks where the user needs to be kept informed with the status of a task. Example of particular types of application for this type of iBead are given below.

Example 1: The user buys an "WLAN status bead" to check when they are in range of a WLAN hotspot, and docks it on their functional cover. The bead glows when it is in range (after getting the information from the handset).

Example 2: The user buys a "Wizard Bead" from their online gaming environment, which represents the health of their character in the online world. When the character is in danger, the wizard-shaped bead glows red, prompting the user to interact more with the online world.

Example 3: The user decides to back up the photos in the phone's inbox to their Club Nokia storage space. The status iBead flickers showing the data being sent, and glows green once the transfer is complete.

Thus, it will be appreciated that the described embodiments of the invention provide a solution which might replace some of the utilitarian things which people carry in their wallets with potentially items which can serve as fashion items but also have a function, this function being to simplify the, for example, mobile phones are used.

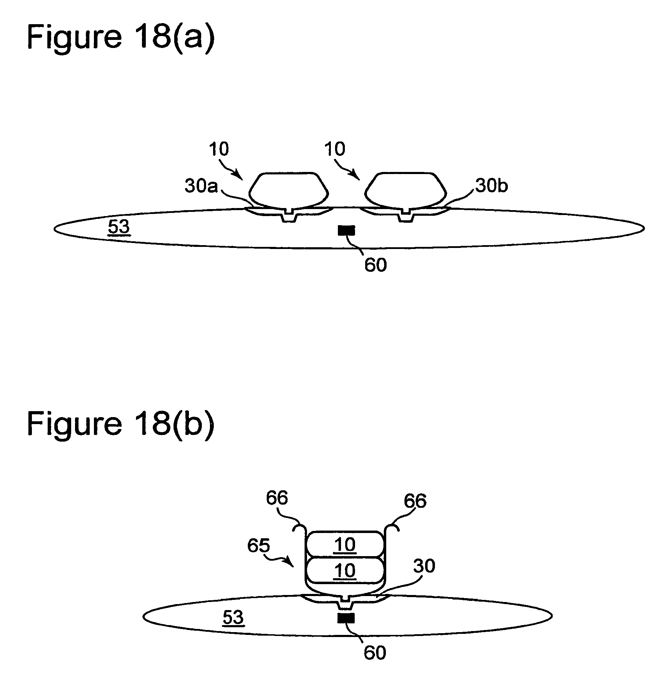

Figures 18(a) and Figures 18(b) show arrangement in which two iBeads are docked for reading at the same time. In the Figure 18(a) arrangement, two separate docking mechanisms 30a, 30b are provided adjacent one another. An iBead 10 can then be docked into the respective docking mechanism 30a, 30b. A single RF ID reader 60 is located intermediate the docking mechanisms. The RF ID reader 60 is provided with software which implements an anti-collision algorithm which enables both docked iBeads to be detected and individually read. In the Figure 18(b) arrangement, an adaptor 65 is removably docked in a single docking mechanism 30. The adaptor 65 hosts a pair of iBeads 10 at the same time between a pair of resilient arms 66, which allow the iBeads to be inserted and removed. The curves at the end of the arms 66 facilitate the easy initial insertion of the iBeads. In this embodiment too, anti-collision software is needed. By reading both iBeads at the same time, the functionality of the iBead system can be extended. For example, two business partners each carry an iBead which when used separately access their company bank account When both iBeads are simultaneously docked, then and only then can funds be transferred from a joint bank account.

It is also noted that by docking a plurality of iBeads at the same time, a physical programming language can be created, where each iBead represents a command e.g. Call, Open Web Page Of, or an argument of a command e.g., Ingrid, Mike. In such a programming language , the order of the iBeads may also have meaning.

In other embodiments (not shown), each docking mechanism 30 could be provided with a dedicated RF ID reader and the range of the RF ID reader could be adjusted to prevent mutual interference.

## Claims

1. An apparatus (50), comprising:
a memory means (59) arranged to store a plurality of codes, each code being associated with an operation;
a docking means (30) arranged to receive a device (10), the device (10) comprising a radio frequency tag (20);
a radio frequency reading means (60) operable, in response to the docking means (30) receiving the device (10), to read a code from the radio frequency tag (20);
a radio interface means for transmitting and receiving data in a network; and
a controlling means (58) operable to determine whether the read code corresponds with one of the plurality of stored codes, and when the read code corresponds with one of the plurality of stored codes, to perform an operation associated with the corresponding stored code and when the read code does not correspond with one of the plurality of stored codes, to control the radio interface means to transmit, in dependence upon the read code, a message to a remote server, wherein the message comprises an action code field comprising at least the read code and wherein the message is configured to initialize an action.

2. An apparatus (50) as claimed in claim 1, wherein the radio interface means is operable, to receive instructions from a remote server for performing an operation at the apparatus.

3. An apparatus (50) as claimed in claim 1 or 2, wherein the radio frequency reading means (60) is operable to read a code from the radio frequency tag (20) only in response to the docking means (30) receiving the device (10).

4. An apparatus (50) as claimed in any of the preceding claims, wherein the performance of the operation causes the apparatus (50) to:
send an email,
open a browser at a predetermined IP address, or
enter a secrecy mode.

5. An apparatus (50) as claimed in any of the preceding claims, wherein the docking means (30) is arranged to enable a plurality of devices (10) to be docked in the docking means (30) simultaneously.

6. An apparatus (50) as claimed in claim 5, wherein the controlling means (58) is operable to perform an operation in response to the plurality of devices (10) being docked in the docking means (30) simultaneously.

7. An apparatus (50) as claimed in any of the preceding claims, wherein the docking means (30) is arranged to provide tactile feedback to a user when the docking means (30) receives a device (10).

8. A method, comprising:
docking a device (10) comprising a radio frequency tag (20) to an apparatus (50) comprising a memory means (59) operable to store a plurality of codes, each code being associated with an operation;
reading, in response to the docking of the device (10), a code from the radio frequency tag (20);
determining whether the read code corresponds with one of the plurality of stored codes; and
performing, when the read code corresponds with one of the plurality of stored codes, an operation associated with the corresponding stored code and when the read code does not correspond with one of a plurality of stored codes, transmitting a message to a remote server dependent upon the read code, wherein the message comprises an action code field comprising at least the read code and wherein the message is configured to initialize an action.

9. A method as claimed in claim 8, comprising receiving instructions from a first destination for performing an operation at the apparatus.

10. A method as claimed in claim 8 or 9, comprising receiving instructions from a second destination for performing an operation at the apparatus.

11. A method as claimed in any of claims 8 to 10, wherein the docking of the device activates a switch means operable to signal to the radio frequency reading means to perform a read operation when the docking means receives the device.

12. A method as claimed in any of claims 8 to 11, wherein the code is read from the radio frequency tag (20) only in response to the docking of the device.

13. A method as claimed in any claims 8 to 12, wherein the performance of the operation causes:
the sending of an email,
a browser to open at a predetermined IP address, or
a secrecy mode to be entered.

14. A method as claimed in any of claims 8 to 12, wherein a plurality of devices (10) can be docked simultaneously.

15. A method as claimed in claim 14, wherein an operation is performed in response to the plurality of devices (10) being docked simultaneously.

16. A method as claimed in any of claims 8 to 12, wherein tactile feedback is provided to a user when the device (10) is docked.

17. A computer program comprising computer readable program code configured to cause execution of the method of any of claims 8 to 16 when said program is run on a computer.

18. The computer program according to claim 17, wherein the computer program is a computer program product comprising a computer-readable medium bearing computer program code embodied therein for use with a computer.

## Patentansprüche

1. Gerät (50), umfassend:
- ein Speichermittel (59), eingerichtet, um mehrere Codes zu speichern, wobei jeder Code mit einem Vorgang verknüpft ist;
- ein Dockingmittel (30), das eingerichtet ist, um eine Vorrichtung (10) anzunehmen, wobei die Vorrichtung (10) ein Funkfrequenz-Etikett (20) umfasst;
- ein Funkfrequenz-Lesemittel (60), das betriebsfähig ist, um in Reaktion auf das Annehmen der Vorrichtung (10) durch das Dockingmittel (30) einen Code von dem Funkfrequenz-Etikett (20) zu lesen;
- ein Funkschnittstellen-Mittel zum Senden und Empfangen von Daten in einem Netzwerk; und
- ein Steuermittel (58), betriebsfähig, um zu bestimmen, ob der gelesene Code einem der mehreren gespeicherten Codes entspricht, und wenn der gelesene Code einem der mehreren gespeicherten Codes entspricht, einen Vorgang auszuführen, der mit dem entsprechenden gespeicherten Code verknüpft ist, und wenn der gelesene Code nicht einem der mehreren gespeicherten Codes entspricht, das Funkschnittstellen-Mittel in Abhängigkeit von dem gelesenen Code zu steuern, eine Nachricht an einen entfernten Server zu senden, wobei die Nachricht ein Aktionscode-Feld umfasst, das mindestens den gelesenen Code umfasst, und wobei die Nachricht konfiguriert ist, eine Aktion zu initialisieren.

2. Gerät (50) gemäß Anspruch 1, wobei das Funkschnittstellen-Mittel betriebsfähig ist, um Anweisungen von einem entfernten Server zu empfangen, um einen Vorgang bei dem Gerät auszuführen.

3. Gerät (50) gemäß Anspruch 1 oder 2, wobei das Funkfrequenz-Lesemittel (60) betriebsfähig ist, um einen Code von dem Funkfrequenz-Etikett (20) nur in Reaktion darauf zu lesen, dass das Dockingmittel (30) die Vorrichtung (10) annimmt.

4. Gerät (50) gemäß einem der vorstehenden Ansprüche, wobei das Ausführen des Vorgangs das Gerät (50) veranlasst:
eine E-mail zu senden,
einen Browser an einer vorbestimmten IP-Adresse zu öffnen, oder
in einen Geheimhaltungsmodus einzutreten.

5. Gerät (50) gemäß einem der vorstehenden Ansprüche, wobei das Dockingmittel (30) eingerichtet ist, um es mehreren Vorrichtungen (10) zu gestatten, gleichzeitig in dem Dockingmittel (30) angedockt zu werden.

6. Gerät (50) gemäß Anspruch 5, wobei das Steuermittel (58) betriebsfähig ist, einen Vorgang in Reaktion darauf auszuführen, dass die mehreren Vorrichtungen (10) gleichzeitig in dem Dockingmittel (30) angedockt sind.

7. Gerät (50) gemäß einem der vorstehenden Ansprüche, wobei das Dockingmittel (30) eingerichtet ist, um einem Benutzer eine fühlbare Rückmeldung bereitzustellen, wenn das Dockingmittel (30) eine Vorrichtung (10) annimmt.

8. Verfahren, umfassend:
Andocken einer Vorrichtung (10), die ein Funkfrequenz-Etikett (20) umfasst, an ein Gerät (50), das ein Speichermittel (59) umfasst, das betriebsfähig ist, um mehrere Codes zu speichern, wobei jeder Code einem Vorgang zugeordnet ist;
Lesen eines Codes von dem Funkfrequenz-Etikett (20) in Reaktion auf das Andocken der Vorrichtung (10);
Bestimmen, ob der gelesene Code einem der mehreren gespeicherten Codes entspricht; und
wenn der gelesene Code einem der mehreren gespeicherten Codes entspricht, Ausführen eines Vorgangs, der mit dem entsprechenden gespeicherten Code verknüpft ist, und wenn der gelesene Code nicht einem der mehreren gespeicherten Codes entspricht, Senden einer Nachricht an einen entfernten Server, in Abhängigkeit von dem gelesenen Code, wobei die Nachricht ein Aktionscode-Feld umfasst, das mindestens den gelesenen Code umfasst, und wobei die Nachricht konfiguriert ist, eine Aktion zu initialisieren.

9. Verfahren gemäß Anspruch 8, umfassend: Empfangen von Anweisungen von einem ersten Zielort zum Ausführen eines Vorgangs bei dem Gerät.

10. Verfahren gemäß Anspruch 8 oder 9, umfassend: Empfangen von Anweisungen von einem zweiten Zielort zum Ausführen eines Vorgangs bei dem Gerät.

11. Verfahren gemäß einem der Ansprüche 8 bis 10, wobei das Andocken der Vorrichtung ein Schaltermittel aktiviert, das betriebsfähig ist, um dem Funkfrequenz-Lesemittel zu signalisieren, einen Lesevorgang auszuführen, wenn das Dockingmittel die Vorrichtung annimmt.

12. Verfahren gemäß einem der Ansprüche 8 bis 11, wobei der Code nur in Reaktion auf das Andocken der Vorrichtung von dem Funkfrequenz-Etikett (20) gelesen wird.

13. Verfahren gemäß einem der Ansprüche 8 bis 12, wobei das Ausführen des Vorgangs veranlasst:
dass eine E-mail gesendet wird,
einen Browser an einer vorbestimmten IP-Adresse zu öffnen, oder
einen Eintritt in einen Geheimhaltungsmodus.

14. Verfahren gemäß einem der Ansprüche 8 bis 12, wobei mehrere Vorrichtungen (10) gleichzeitig angedockt zu werden können.

15. Verfahren gemäß Anspruch 14, wobei in Reaktion darauf, dass die mehreren Vorrichtungen (10) gleichzeitig angedockt werden, ein Vorgang ausgeführt wird.

16. Verfahren gemäß einem der Ansprüche 8 bis 12, wobei einem Benutzer eine fühlbare Rückmeldung bereitgestellt wird, wenn die Vorrichtung (10) angedockt wird.

17. Computerprogramm, umfassend computerlesbaren Programmcode, der konfiguriert ist, das Durchführen des Verfahrens eines der Ansprüche 8 bis 16 zu veranlassen, wenn das Programm auf einem Computer abläuft.

18. Computerprogramm, gemäß Anspruch 17, wobei das Computerprogramm ein Computerprogrammprodukt ist, das ein computerlesbares Medium umfasst, das darin ausgeführten Computerprogrammcode zur Verwendung mit einem Computer trägt.

## Revendications

1. Appareil (50), comprenant:
un moyen de mémoire (59) agencé pour stocker une pluralité de codes, chaque code étant associé à une opération;
un moyen d'accueil (30) agencé pour recevoir un dispositif (10), le dispositif (10) comprenant une étiquette d'identification par radiofréquence (20);
un moyen de lecture par radiofréquence (60) actionnable, en réponse à la réception du dispositif (10) par le moyen d'accueil (30), pour lire un code en provenance de l'étiquette d'identification par radiofréquence (20);
un moyen d'interface radio pour transmettre et recevoir des données dans un réseau; et
un moyen de contrôle (58) actionnable pour déterminer si le code lu correspond à un code parmi la pluralité de codes stockés, et lorsque le code lu correspond à un code parmi la pluralité de codes stockés, pour effectuer une opération associée au code correspondant stocké et lorsque le code lu ne correspond pas à un code parmi la pluralité de codes stockés, pour commander le moyen d'interface radio pour transmettre, en fonction du code lu, un message à un serveur distant, dans lequel le message comprend un champ de code d'action comprenant au moins le code lu et dans lequel le message est configuré pour initialiser une action.

2. Appareil (50) selon la revendication 1, dans lequel le moyen d'interface radio est actionnable, pour recevoir des instructions en provenance d'un serveur distant pour exécuter une opération au niveau de l'appareil.

3. Appareil (50) selon la revendication 1 ou 2, dans lequel le moyen de lecture par radiofréquence (60) est actionnable pour lire un code en provenance de l'étiquette d'identification par radiofréquence (20) uniquement en réponse à la réception du dispositif (10) par le moyen d'accueil (30).

4. Appareil (50) selon l'une quelconque des revendications précédentes, dans lequel l'exécution de l'opération amène l'appareil (50) :
à envoyer un courrier électronique,
à ouvrir un navigateur à une adresse IP prédéterminée, ou
à entrer dans un mode secret.

5. Appareil (50) selon l'une quelconque des revendications précédentes, dans lequel le moyen d'accueil (30) est agencé pour permettre à une pluralité de dispositifs (10) d'être simultanément accueillis dans le moyen d'accueil (30).

6. Appareil (50) selon la revendication 5, dans lequel le moyen de contrôle (58) est actionnable pour effectuer une opération en réponse à l'accueil simultané d'une pluralité de dispositifs (10) dans le moyen d'accueil (30).

7. Appareil (50) selon l'une quelconque des revendications précédentes, dans lequel le moyen d'accueil (30) est agencé pour fournir un retour tactile à un utilisateur lorsque le moyen d'accueil (30) reçoit un dispositif (10).

8. Procédé, comprenant les étapes consistant à:
accueillir un dispositif (10) comprenant une étiquette d'identification par radiofréquence (20) par un appareil (50) comprenant un moyen de mémoire (59) actionnable pour stocker une pluralité de codes, chaque code étant associé à une opération;
lire, en réponse à l'accueil du dispositif (10), un code en provenance de l'étiquette d'identification par radiofréquence (20);
déterminer si le code lu correspond à un code parmi la pluralité de codes stockés, et
effectuer, lorsque le code lu correspond à un code parmi la pluralité de codes stockés, une opération associée au code stocké correspondant et lorsque le code lu ne correspond pas à un code parmi la pluralité de codes stockés, transmettre un message à un serveur distant en fonction du code lu, dans lequel le message comprend un champ de code d'action comprenant au moins le code lu et dans lequel le message est configuré pour initialiser une action.

9. Procédé selon la revendication 8, comprenant l'étape consistant à recevoir des instructions en provenance d'une première destination pour exécuter une opération au niveau de l'appareil.

10. Procédé selon la revendication 8 ou 9, comprenant l'étape consistant à recevoir des instructions en provenance d'une deuxième destination pour effectuer une opération au niveau de l'appareil.

11. Procédé selon l'une quelconque des revendications 8 à 10, dans lequel l'accueil du dispositif active un moyen de commutation actionnable pour indiquer au moyen de lecture par radiofréquence qu'il doit effectuer une opération de lecture lorsque le moyen d'accueil reçoit le dispositif.

12. Procédé selon l'une quelconque des revendications 8 à 11, dans lequel le code est lu à partir de l'étiquette d'identification par radiofréquence (20) uniquement en réponse à l'accueil du dispositif.

13. Procédé selon l'une quelconque des revendications 8 à 12, dans lequel l'exécution de l'opération provoque :
l'envoi d'un courrier électronique,
l'ouverture d'un navigateur à une adresse IP prédéterminée, ou
l'entrée dans un mode secret.

14. Procédé selon l'une quelconque des revendications 8 à 12, dans lequel une pluralité de dispositifs (10) peut être simultanément accueillie.

15. Procédé selon la revendication 14, dans lequel une opération est effectuée en réponse à l'accueil simultané d'une pluralité de dispositifs (10).

16. Procédé selon l'une quelconque des revendications 8 à 12, dans lequel un retour tactile est fourni à un utilisateur lorsque l'appareil (10) est accueilli.

17. Programme informatique comprenant un code de programme lisible par ordinateur configuré pour provoquer la mise en oeuvre du procédé selon l'une quelconque des revendications 8 à 16 lorsque ledit programme est exécuté sur un ordinateur.

18. Programme informatique selon la revendication 17, dans lequel le programme informatique est un produit programme informatique comprenant un support lisible par ordinateur portant un code de programme informatique qui y est incorporé pour une utilisation avec un ordinateur.
